# EUROPEAN PATENT APPLICATION

(11) **EP 4 769 903 A1**
(43) Date of publication of application: **01.07.2026**
(21) Application number: 24855646.6
(22) Date of filing: 12.08.2024
(51) Int. Cl.: H02K 1/18, H02K 9/19, H02K 41/02, F16F 6/00, F16F 15/03, F16F 15/067, B60G 13/02

(54) **PRIMARY ASSEMBLY, LINEAR MOTOR, ELECTROMAGNETIC SHOCK ABSORBER, AND VEHICLE**

(30) Priority: 24.08.2023 CN 202311076469
(71) Applicant: BYD Company Limited, Shenzhen, Guangdong 518118 (CN)
(72) Inventor: JIN, Yingzi, Shenzhen, Guangdong 518118 (CN); MA, Bingqing, Shenzhen, Guangdong 518118 (CN); TAN, Guodong, Shenzhen, Guangdong 518118 (CN); QI, Wenming, Shenzhen, Guangdong 518118 (CN)
(74) Representative: Mathys & Squire
(86) International application number: PCT/CN2024/111513
(87) International publication number: WO 2025/039920

(57) **Abstract**

Disclosed is a vehicle equipped with an electromagnetic shock absorber. The electromagnetic shock absorber includes a linear motor. The linear motor includes a primary component that includes a primary iron core, a partition, and a water inlet pipe. A hollow cavity is provided in the primary iron core. The partition is at least partially disposed in the hollow cavity to form a first chamber sealed at one end. The partition includes a cylindrical body. An annular cavity is provided between the cylindrical body and an inner wall of the primary iron core, and the annular cavity is located in the first chamber. An outlet end of the water inlet pipe is disposed in the annular cavity.

## Description

### CROSS-REFERENCE TO RELATED APPLICATIONS

This application claims priority to Chinese Patent Application No. 202311076469.9, filed on August 24, 2023 and entitled "PRIMARY COMPONENT, LINEAR MOTOR, ELECTROMAGNETIC SHOCK ABSORBER, AND VEHICLE", which is incorporated herein by reference in its entirety.

### TECHNICAL FIELD

This application relates to the field of linear motor technologies, and more specifically, to a primary component, a linear motor, an electromagnetic shock absorber, and a vehicle.

### BACKGROUND

Electromagnetic shock absorbers are widely used in new intelligent vehicle suspensions. The electromagnetic shock absorber can control, through electromagnetic induction, a linear motor to generate opposing damping force based on a road condition and a driving condition, to suppress vehicle vibration and maintain vehicle body stability. A response speed of the electromagnetic shock absorber is up to 1000 Hz, which is five times faster than a conventional shock absorber, effectively resolving a contradiction between comfort and dynamic performance.

In related technologies, a primary iron core of a linear motor is formed by stacking a plurality of layers of iron core laminations in an axial direction, resulting in a complex manufacturing process, lower processing efficiency, and high costs. In addition, a sealing structure of the linear motor occupies primary axial space in the linear motor, leading to a larger size of the linear motor. Furthermore, a cooling structure of the linear motor may increase space occupied by the linear motor, or the cooling structure is complex, and implementation is difficult.

Therefore, there is a need to provide a new primary component, linear motor, electromagnetic shock absorber, and vehicle to at least partially resolve the foregoing problems.

### SUMMARY

This application is provided to resolve at least one of the foregoing problems. This application provides a primary component. The primary component includes: a primary iron core, wherein a hollow cavity is provided in the primary iron core; a partition, wherein the partition is at least partially disposed in the hollow cavity to form a first chamber sealed at one end, the partition including a cylindrical body, an annular cavity is provided between the cylindrical body and an inner wall of the primary iron core, and the annular cavity is located in the first chamber; and a water inlet pipe, wherein an outlet end of the water inlet pipe is disposed in the annular cavity.

For example, a water inlet and a water outlet are disposed on one end of the primary iron core that is away from the annular cavity, the water inlet being used to allow an external cooling medium to enter the iron core or used to allow the water inlet pipe to pass through, and the water outlet being used to discharge the cooling medium outside the iron core.

For example, the water inlet pipe is constructed as a hollow annular pipe, and an inner cylinder and an outer cylinder of the annular pipe are enclosed to form the water inlet pipe. A gap is provided between the outer cylinder of the annular pipe and the inner wall of the primary iron core, and the gap communicates with the water outlet. A through hole is provided in the annular pipe, the through hole communicates with the gap, and the through hole is located in the annular cavity.

For example, the water inlet pipe is constructed as the hollow annular pipe, a gap is provided between the inner cylinder of the annular pipe and the cylindrical body of the partition, the gap communicates with the water outlet, a through hole is provided in the annular pipe, the through hole communicates with the gap, and the through hole is located in the annular cavity.

For example, an axis of the water outlet coincides with an axis of the hollow cavity.

For example, the partition further includes an annular bottom plate, and the annular bottom plate connects the inner wall of the primary iron core and one end of the cylindrical body that is away from the water outlet.

For example, a spacing between one end of the water inlet pipe that is away from the water inlet and a surface of the annular bottom plate that faces the water inlet is less than 5 mm.

For example, the end of the water inlet pipe that is away from the water inlet abuts against the surface of the annular bottom plate that faces the water inlet, a surface of the annular bottom plate that faces the water inlet blocks one end of the water inlet pipe that is away from the water inlet, a through hole is provided on a side wall of the water inlet pipe, and the through hole communicates with the water outlet.

For example, a distance between a center of the through hole and the surface of the annular bottom plate that faces the water inlet is less than 5 mm.

For example, the cylindrical body includes a cylindrical plate, and the annular bottom plate includes a circular ring bottom plate.

For example, the cylindrical body further includes a circular top plate, and the circular top plate is connected to one end of the cylindrical body that is close to the water outlet, to block one end of the cylindrical body.

For example, the end of the water inlet pipe that is away from the water inlet is an inclined end face, and the inclined end face partially abuts against the surface of the annular bottom plate that faces the water inlet.

For example, the water inlet pipe includes at least two branch water inlet pipes, and the at least two branch water inlet pipes are spaced apart in a circumferential direction of the annular cavity.

For example, the primary iron core includes a core body and a hollow core shaft, the hollow core shaft is sleeved in the core body, and a central hole of the hollow core shaft is configured as the hollow cavity.

For example, the primary component further includes a plurality of windings. The plurality of windings are sequentially disposed on the core body in an axial direction. The water outlet is disposed at the end of the primary iron core that is away from the annular cavity. The partition includes the annular bottom plate, and the annular bottom plate is connected to one end of the primary iron core that is away from the water outlet. The outlet end of the water inlet pipe is disposed close to the annular bottom plate, and the outlet end of the water inlet pipe communicates with the water outlet through the first chamber.

This application further provides a linear motor including the primary component.

For example, the linear motor further includes a secondary component. The secondary component is sleeved outside the primary component.

For example, the linear motor further includes: The secondary component includes a sleeve and a plurality of magnetic steels disposed on an inner side wall of the sleeve, the primary iron core is cylindrical, and the sleeve is sleeved in the primary iron core.

For example, the linear motor further includes a guide bar. The guide bar is fastened to the sleeve, and the guide bar is movably inserted into the cylindrical body.

For example, the guide bar, the cylindrical body, and the hollow cavity are coaxial.

This application further provides an electromagnetic shock absorber, including the linear motor.

This application further provides a vehicle, including the linear motor or the electromagnetic shock absorber.

According to this application, a cavity and a cooling component are disposed in a primary core shaft. This reduces a weight of the linear motor, increases force density of the linear motor, and enhances cooling effect of the linear motor.

### BRIEF DESCRIPTION OF DRAWINGS

To describe technical solutions in embodiments of this application more clearly, the following briefly describes the accompanying drawings required for describing embodiments. It is clear that the accompanying drawings in the following description show merely some embodiments of this application, and a person of ordinary skill in the art may still derive other drawings from these accompanying drawings without creative efforts.
FIG. 1 is an overall sectional view of an electromagnetic shock absorber according to an embodiment of this application;
FIG. 2 is a sectional view of a structure of a linear motor according to an embodiment of this application;
FIG. 3A is a sectional view of a structure of a primary component according to an embodiment of this application;
FIG. 3B is a sectional view of a structure of a primary component according to an embodiment of this application;
FIG. 3C is a sectional view of a structure of a primary component according to an embodiment of this application;
FIG. 3D is a sectional view of a structure of a primary component according to an embodiment of this application;
FIG. 4 is a diagram of a winding of a linear motor according to an embodiment of this application;
FIG. 5 is a diagram of a primary unit according to an embodiment of this application;
FIG. 6 is a diagram of a connection and leads of a linear motor according to an embodiment of this application;
FIG. 7 is a diagram of a sensor of an electromagnetic shock absorber according to an embodiment of this application;
FIG. 8 is a block diagram of an electromagnetic shock absorber according to an embodiment of this application;
FIG. 9A is a block diagram of a vehicle according to an embodiment of this application; and
FIG. 9B is a block diagram of a vehicle according to another embodiment of this application.

In the accompanying drawings:
1: electromagnetic shock absorber; 17: upper mount; 18: spring; 19: linear motor; 2: three-phase lead; 3: sleeve; 4: magnetic steel; 5: core unit; 6: hollow core shaft; 7: guide bar; 8: magnetic grid; 9: sensor read head; 10: first buffer member; 11: second buffer member; 12: partition; 13: water inlet pipe; 14: winding; 15: first wire; 15: second wire; 511: first through hole; 511: second through hole; 512: first slot; 512: second slot; 513: first positioning member; 513: second positioning member; 300: primary component; 310: hollow cavity; 311: first chamber; 312: second chamber; 120: annular cavity; 121: cylindrical body; 122: annular bottom plate; 123: circular top plate; 130: gap; 131: inner cylinder; 132: outer cylinder; 133: branch water inlet pipe; 320: through hole; 321: water inlet; 322: water outlet; 61: core body; 60: primary iron core; 30: secondary component.

### DESCRIPTION OF EMBODIMENTS

To make objectives, technical solutions, and advantages of this application clearer, the following describes example embodiments of this application in detail with reference to the accompanying drawings. Clearly, the described embodiments are merely a part rather than all of embodiments of this application. It will be understood that this application is not limited to the example embodiments described herein. All other embodiments obtained by a person skilled in the art based on embodiments of this application without creative efforts shall fall within the protection scope of this application.

In the following descriptions, a lot of specific details are given to provide a more thorough understanding of this application. However, it will be apparent to those skilled in the art that this application may be implemented without one or more of these details. In other examples, to avoid confusion with this application, some technical features known in the art are not described.

It will be understood that this application can be implemented in different forms and should not be construed as limited to embodiments described herein. On the contrary, these embodiments are provided so that this disclosure will be thorough and complete, and the scope of this application is fully conveyed to a person skilled in the art.

The terms used herein are intended to describe specific embodiments only and are not intended to limit this application. When used herein, the terms "one", "a", and "the/this" of singular forms used are also intended to include plural forms, unless otherwise specified in the context clearly. It will be further understood that the terms "consist" and/or "include", when used in this specification, specify presence of the stated features, integers, steps, operations, elements, and/or components, with presence or addition of one or more other features, integers, steps, operations, elements, components, and/or their groups not excluded. When used herein, the term "and/or" includes any and all combinations of related enumerated items.

For a thorough understanding of this application, detailed structures are provided in the following descriptions, to explain the technical solution provided in this application. Optional embodiments of this application are described in detail below. However, in addition to these detailed descriptions, this application may have other implementations.

Implementations of this application are described in detail below with reference to the accompanying drawings. When no conflict occurs, the following embodiments and the features in the embodiments can be mutually combined.

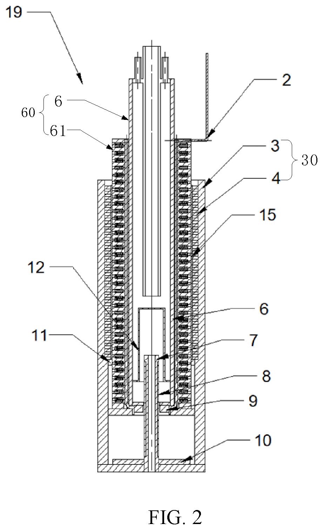

In an embodiment, as shown in FIG. 2, FIG. 3A to FIG. 3D, and FIG. 5, a primary component 300 provided in this application includes a primary iron core 60, where a hollow cavity 310 is provided in the primary iron core 60.

In an embodiment, the primary iron core 60 includes a core body 61 and a hollow core shaft 6, the hollow core shaft 6 is sleeved in the core body 61, and a central hole of the hollow core shaft 6 is configured as the hollow cavity 310.

Further, the primary component 300 further includes a partition 12. The partition 12 is at least partially disposed in the hollow cavity 310 to form a first chamber 311 sealed at one end. The partition 12 includes a cylindrical body 121. An annular cavity is provided between the cylindrical body 121 and an inner wall of the primary iron core 60, and the annular cavity 120 is located in the first chamber 311.

Further, the primary component 300 further includes a water inlet pipe 13. An outlet end of the water inlet pipe 13 is disposed in the annular cavity 120. The water inlet pipe 13 is configured to provide a cooling medium, and the water inlet pipe is disposed to cool the primary component 300.

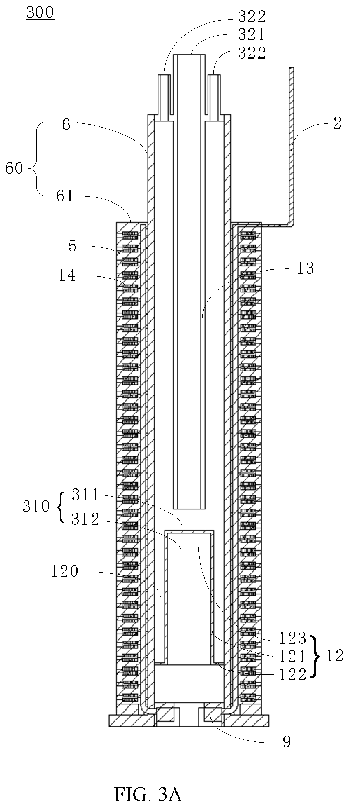

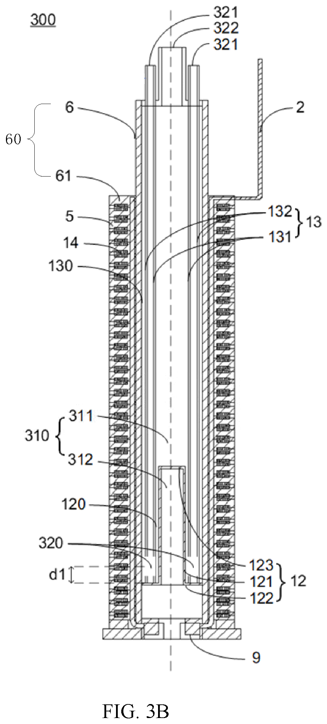

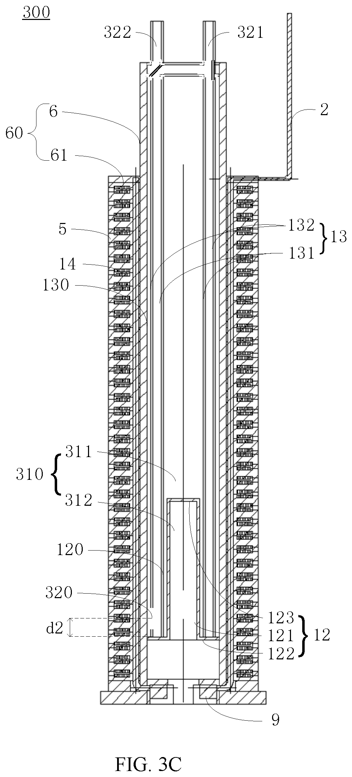

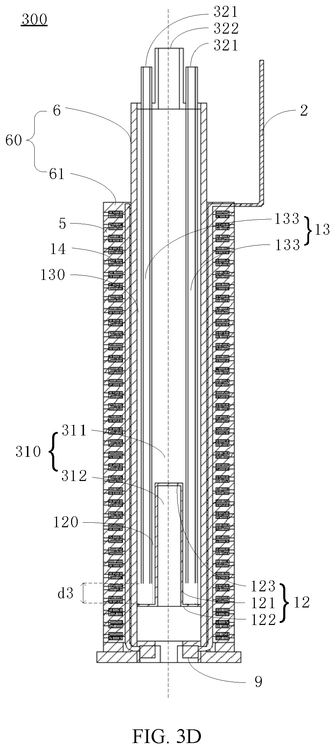

The water inlet pipe 13 may be implemented in the following manners. In an embodiment, as shown in FIG. 3D, the water inlet pipe 13 includes at least two branch water inlet pipes 133, and the at least two branch water inlet pipes 133 are spaced apart in a circumferential direction of the annular cavity 120. In another embodiment, as shown in FIG. 3B and FIG. 3C, the water inlet pipe 13 is constructed as a hollow annular pipe, and an inner cylinder 131 and an outer cylinder 132 of the annular pipe are enclosed to form the water inlet pipe 13. As shown in FIG. 3C, a gap 130 is provided between the outer cylinder 132 of the annular pipe and the inner wall of the primary iron core 60, and the gap 130 communicates with the water outlet 322. A through hole 320 is provided in the annular pipe, the through hole 320 communicates with the gap 130, the gap 130 communicates with the water outlet 322 through the through hole 320, and the through hole 320 is located in the annular cavity 120. In another embodiment, as shown in FIG. 3B, the water inlet pipe 13 is constructed as a hollow annular pipe, a gap is provided between the inner cylinder 131 of the annular pipe and the cylindrical body of the partition 12, the gap 130 communicates with the water outlet 322, a through hole 320 is provided in the annular pipe, the through hole 320 communicates with the gap 130, and the through hole 320 is located in the annular cavity 120. It is worth noting that the through hole may be provided in an inner tube or an outer tube, or through holes may be provided in both the inner tube and the outer tube.

In some embodiments, the end of the water inlet pipe 13 that is away from the water inlet 321 is an inclined end face, and the inclined end face partially abuts against the surface of the annular bottom plate 122 that faces the water inlet 321. A through hole may be provided in the water inlet pipe 13, and the through hole communicates with the annular cavity.

In an embodiment, as shown in FIG. 3A to FIG. 3D, a water inlet 321 and a water outlet 322 are disposed on one end of the primary iron core 60 that is away from the annular cavity 120, the water inlet 321 is used to allow an external cooling medium to enter the primary iron core 60 or used to allow the water inlet pipe 13 to pass through, and the water outlet 322 is used to discharge the cooling medium outside the primary iron core 60. For example, an axis of the water outlet 322 coincides with an axis of the hollow cavity 310.

In an embodiment, as shown in FIG. 3A to FIG. 3D, the partition 12 further includes an annular bottom plate 122, and the annular bottom plate 122 connects the inner wall of the primary iron core 60 and one end of the cylindrical body 121 that is away from the water outlet 322. The cylindrical body 121 includes a cylindrical plate, and the annular bottom plate 122 includes a circular ring bottom plate. For example, as shown in FIG. 3D, a spacing between one end of the water inlet pipe 13 that is away from the water inlet 321 and a surface of the annular bottom plate 122 that faces the water inlet 321 is d3, where d3 is less than 5 mm.

In an embodiment, as shown in FIG. 3B and FIG. 3C, the end of the water inlet pipe 13 that is away from the water inlet 321 abuts against the surface of the annular bottom plate 122 that faces the water inlet 321, a surface of the annular bottom plate 122 that faces the water inlet 321 blocks one end of the water inlet pipe 13 that is away from the water inlet 321, a through hole 320 is provided on a side wall of the water inlet pipe 13, and the through hole communicates with the water outlet 322. In other words, the through hole communicates with space in the annular cavity that is located outside the water inlet pipe, and further communicates with the water outlet. For example, as shown in 3B, a distance, namely, d1 and d2, between a center of the through hole 320 and the surface of the annular bottom plate 122 that faces the water inlet 321 is less than 5 mm; as shown in FIG. 3C, a distance d2 between the center of the through hole 320 and the surface of the annular bottom plate 122 that faces the water inlet 321 is less than 5 mm.

In an embodiment, the cylindrical body 121 further includes a circular top plate 123, and the circular top plate 123 is connected to one end of the cylindrical body 121 that is close to the water outlet 322, to block one end of the cylindrical body 121.

In an embodiment, as shown in FIG. 3A and FIG. 3B, the hollow cavity 310 in the primary iron core 60 is divided by the partition 12 into the first chamber 311 and a second chamber 312, and the water inlet pipe 13 is connected to a vehicle cooling system. Coolant enters through the water inlet 321 in the middle, cools the linear motor, and then flows out through water outlet pipes on two sides, thereby enhancing a heat dissipation capability of the linear motor. Because a position is reserved in the primary iron core 60 for a sensor, the partition 12 needs to be designed to seal the primary iron core 60, preventing leakage from the water inlet pipe 13 in an upper portion to a lower portion. A structure of the partition 12 is in a "Π" shape, leaving a surrounding area that forms a dead water zone after water flows through the linear motor. Compared to an "I"-shaped sealing structure, this design still has advantages for heat dissipation of the linear motor. A distance between the water inlet 321 and a top surface of the partition 12 is at least 10 mm, to ensure efficient water intake.

In an embodiment, as shown in FIG. 3A and FIG. 3B, an axis of one of the water inlet 321 and the water outlet 322 coincides with an axis of the primary iron core 60, the water inlet 321 is located in the middle of the water inlet pipe 13 of the linear motor, and the water outlets 322 are located on two sides of the water inlet 321. As shown in FIG. 3B, if space allows, pipes on two sides may be disposed as water inlets 321, and pipes in the middle may be disposed as a water outlet 322. In this case, there is no dead water zone in the entire water inlet pipe 13, resulting in optimal performance. To ensure efficiency of the water inlet pipe 13, the water outlet pipe is usually equipped with a water pump, to quickly draw water into a vehicle cooling system for circulation. The cooling structure 13 of the linear motor has one water inlet 321 and two water outlets 322. Arrangement of the water inlet 321 and the water outlets 322 is preferably such that an axis of one of water inlet 321 and the water outlets 322 coincides with the axis of the primary iron core 60, so that water cooling effect of the linear motor is more uniform.

In an embodiment, if space is limited, the water inlet pipe 13 of the linear motor may be provided with only one water inlet 321 and one water outlet 322, and arrangement is preferably such that an axis of one of water inlet 321 or the water outlet 322 coincides with the axis of the primary iron core 60. If such arrangement cannot be ensured, it is preferable that the water inlet 321 and the water outlet 322 are symmetrically placed.

In an embodiment, the primary iron core 60 may be matched with the water inlet pipe 13 through integration via 3D printing or through a threaded connection.

In an embodiment, the primary iron core 60 may be matched with the partition 12 through integration via 3D printing or through a threaded connection.

For example, the primary component 300 further includes a plurality of windings 14. The plurality of windings 14 are sequentially disposed on the core body 61 in an axial direction. The water outlet 322 is disposed at the end of the primary iron core 60 that is away from the annular cavity 120. The partition 12 includes the annular bottom plate 122, and the annular bottom plate 122 is connected to one end of the primary iron core 60 that is away from the water outlet 322. The outlet end of the water inlet pipe 13 is disposed close to the annular bottom plate 122, and the outlet end of the water inlet pipe 13 communicates with the water outlet 322 through the first chamber 311. In this way, the cooling medium is in contact with the primary iron core 60 within a length range of the windings 14, to allow the cooling medium to exchange heat with the windings 14 through the primary iron core 60, thereby better cooling the windings 14.

In an embodiment, the core body 61 includes a plurality of core units 5 that are stacked and connected in an axial direction of the hollow core shaft 6. Each core unit 5 is of an annular structure, and each core unit 5 is sleeved on an outer circumferential surface of the hollow core shaft 6. The core unit 5 is assembled onto the hollow core shaft 6 through an interference fit, and an annular accommodating groove is provided between adjacent core units 5. The primary component includes a plurality of windings 14 disposed in the accommodating groove, and each winding 14 is disposed in one accommodating groove in a circumferential direction of the core unit 5. For example, the winding 14 is a disc winding wound with a flat coil, and the plurality of windings 14 are electrically connected to each other. In an embodiment, while ensuring performance of the motor, a hole may be drilled in an appropriate position in the core unit to insert a heat conduction pipe (not shown). The heat conduction pipe extends upward through a topmost core unit, to connect to the vehicle cooling system outside the linear motor, further enhancing the heat dissipation capability of the linear motor.

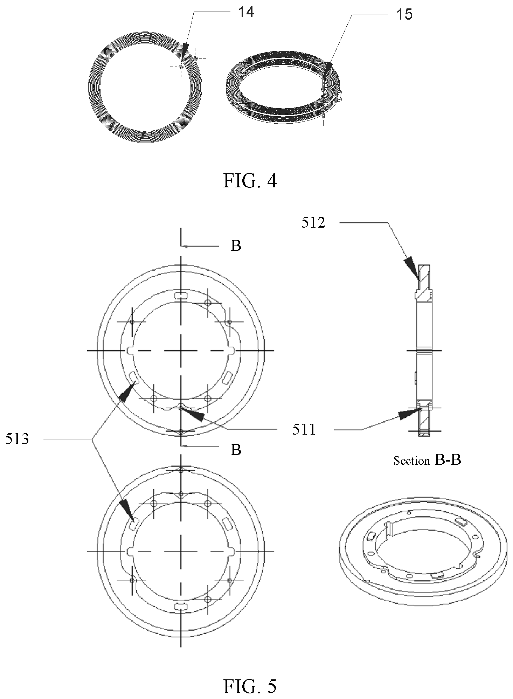

In an embodiment, as shown in FIG. 5, the core unit 5 includes an annular primary yoke portion and a primary tooth portion. The primary tooth portion extends outward in a radial direction of the primary yoke portion, and a thickness of the primary yoke portion in the radial direction is greater than a thickness of the primary tooth portion.

Still referring to FIG. 5, a first positioning member 513 and a second positioning member 513 are separately disposed on end faces of primary yoke portions of adjacent core units 5. The first positioning member 513 and the second positioning member 513 match each other. One of the first positioning member 513 and the second positioning member 513 is a protrusion portion, and the other is a groove. For example, to ensure accuracy during assembly of the core unit 5 and the hollow core shaft 6, the first positioning member 513 and the second positioning member 513 disposed at the primary yoke portions are configured for circumferential positioning, and shapes of the first positioning member 513 and the second positioning member 513 include but are not limited to a rectangular protrusion and a groove, a circular protrusion and a groove, or the like.

Still referring to FIG. 5, a first slot 512 is provided on a first surface of the core unit 5, a second slot 512 is provided on a second surface of the core unit 5 that is away from the first surface. A first slot 512 and a second slot 512 of the adjacent core unit 5 enclose an accommodating groove that is used to accommodate the winding 14.

Still referring to FIG. 5, a first limiting member is disposed in the core unit 5, a second limiting member is disposed in the hollow core shaft 6, and the first limiting member and the second limiting member match each other. For example, one of the first limiting member and the second limiting member is a protrusion portion, and the other is a groove. The first limiting member and the second limiting member are configured to fasten the core unit 5 in a relative position in the hollow core shaft 6 in the axial direction, avoiding relative rotation between the core unit 5 and the hollow core shaft 6. This helps the linear motor generate greater force.

In an embodiment, in addition to forming the primary iron core by sleeving the core unit on the hollow core shaft, core units are connected to each other by using adhesive or through welding, to form the primary iron core.

In an embodiment, the hollow core shaft 6 includes a support plate and a central shaft. The central shaft has a first end and a second end opposite to the first end. The central shaft has a cavity extending in the axial direction. The support plate is disposed on the second end of the central shaft, and extends toward the outside of the central shaft in the radial direction.

For example, a cross section of the hollow core shaft 6 is T-shaped, and the support plate is disposed at the second end of the hollow core shaft 6. The support plate can avoid a risk of the core unit 5 falling during movement of the linear motor. For example, an outer diameter of the support plate is slightly larger than an outer diameter of the core unit 5. In an embodiment, the hollow core shaft may be matched with the support plate through integration via 3D printing or through a threaded connection.

In conclusion, the core body provided in this application is formed through cooperation of a plurality of core units. Compared with a primary iron core formed by stacking silicon steel laminations in related technologies, the primary iron core and the core unit provided in this application feature simple processing processes and simple installation, reducing processing costs and improving component integration.

In an embodiment, FIG. 4 is a diagram of an electrical connection between windings 14 according to an embodiment of this application. Further, a first through hole 511 and a second through hole 511 are provided in each core unit. Each winding 14 includes a first lead end located in an inner ring of the winding 14 and a second lead end located in an outer ring of the winding 14. A first wire 15 passes through the first through hole 511, and is electrically connected to first lead ends of two windings 14 located at two ends of the first through hole 511. A second wire 15 passes through the second through hole 511, and is electrically connected to the second lead ends of two windings located at two ends of the second through hole 511. For example, the first through hole 511 and the second through hole 511 pass through the core unit in the axial direction. The first wire 15 passes through the first through hole 511 and is electrically connected to different windings in series. The second wire 15 passes through the second through hole 511 and is electrically connected to different windings in series.

In an embodiment, the winding 14 includes a first winding and a second winding, the first winding includes a first coil, the second winding includes a second coil, and a winding direction of the first coil in the circumferential direction is opposite to a winding direction of the second coil in the circumferential direction. For example, for adjacent windings 14, it is determined, according to a requirement of a use scenario, that a winding direction of a first coil in the circumferential direction is a clockwise direction and a winding direction of a second coil in the circumferential direction is a counterclockwise direction. Alternatively, the winding direction of the first coil in the circumferential direction is a counterclockwise direction, and the winding direction of the second coil in the circumferential direction is a clockwise direction. The first coil and the second coil are disposed, to control a current flow direction of the winding 14.

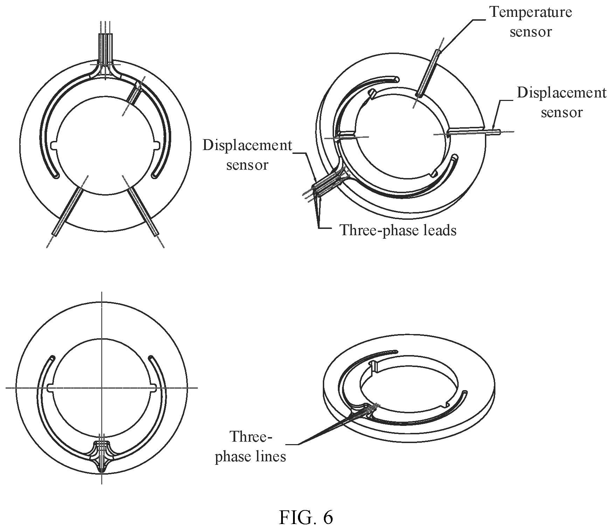

In an embodiment, the winding 14 includes three-phase windings, and the three-phase windings are connected through a star connection. As shown in FIG. 2, the linear motor includes three-phase leads 2. After converging on a top surface of the linear motor, the three-phase leads 2 pass upward through an upper mount 17 to the outside. FIG. 6 is a diagram of a connection of three-phase lines and end face leads of a linear motor according to an embodiment of this application. As shown in FIG. 6, the three-phase lines of the linear motor are connected through a star connection. As shown in FIG. 6, the windings of the linear motor form a star connection at a lowermost primary tooth of a core unit, and are directly led out to the outside after passing through a primary tooth of an uppermost core unit in the primary iron core. The three-phase leads are fastened to a top surface of the uppermost primary tooth through injection molding. In addition, a conductive wire of a sensor and a conductive wire of a temperature sensor are also fastened to the top surface in the same way after being led out.

This application further provides a linear motor, including the primary component. In an embodiment, FIG. 2 is a sectional view of a structure of a linear motor according to an embodiment of this application. As shown in FIG. 2, the linear motor further includes a secondary component 30. The secondary component 30 is sleeved outside the primary component 60. For example, the secondary component 30 includes a sleeve 3 and a plurality of magnetic steels 4 disposed on an inner side wall of the sleeve 3, the primary iron core is cylindrical, and the sleeve 3 is sleeved in the primary iron core 60. The secondary component 30 is configured to be able to move relative to the primary component 60 in the axial direction of the primary component 60. For example, the sleeve 3 is cylindrical. For example, the magnetic steels 4 may be fastened to an inner wall of the sleeve 3 by using adhesive.

In an embodiment, the secondary component 30 further includes a guide bar 7. The guide bar 7 is fastened to the sleeve 3, and the guide bar 7 is movably inserted into the cylindrical body 121. For example, as shown in FIG. 2, the guide bar 7 is disposed on an inner surface of the sleeve 3 that is perpendicular to the axial direction, and the guide bar 7 is movably inserted into the cylindrical body 121. For example, the guide bar 7, the cylindrical body 121, and the hollow cavity 310 are coaxial.

In an embodiment, a first buffer member 10 corresponding to the support plate of the hollow core shaft 6 is disposed on the inner surface of the sleeve 3 that is perpendicular to the axial direction. In an embodiment, the support plate is further disposed at the second end of the hollow core shaft 6, a second buffer member 11 is disposed below the magnetic steel 4, and the second buffer member 11 is opposite to a part of a surface of the support plate. When the secondary component 30 moves downward, a first surface of the support plate comes into contact with the second buffer member 11 installed below the magnetic steel 4, to limit a position, preventing the primary component 60 from detaching from the secondary component 30. When the secondary component 30 moves upward, the first buffer member 10 comes into contact with a second surface of the support plate of the hollow core shaft 6, to limit the position.

In an embodiment, a material of the primary component 60 includes a soft magnetic material, and according to a requirement of an application scenario of the linear motor, an outer diameter size range of the sleeve 3 is not greater than 150 mm (for example, 145mm, 140mm, 135mm, or 130mm); a diameter size range of the core unit 5 is not greater than 115 mm. (for example, 110 mm, 105 mm, 100 mm, or 95 mm). For example, the motor provided in this application can provide force of up to 7 kN in a short time.

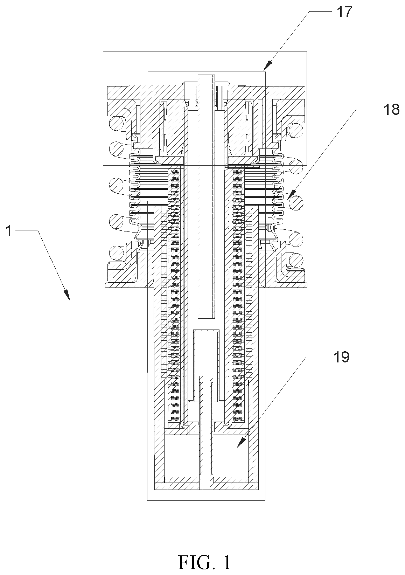

In an embodiment, as shown in FIG. 1 and FIG. 2, the linear motor further includes a displacement sensor, and the displacement sensor is configured to measure displacement vectors of the primary component and the secondary component. The displacement sensor includes a magnetic grid sensor, and the magnetic grid sensor includes a sensor read head 9 and a magnetic grid 8. The sensor read head 9 is disposed in the cavity of the hollow core shaft 6, and the magnetic grid 8 corresponding to the sensor read head 9 is disposed on the guide bar 7. For example, the corresponding sensor read head 9 and magnetic grid 8 are spaced apart by a predetermined distance, where the predetermined distance is less than 5 mm, to ensure measurement accuracy of the sensor.

In an embodiment, the hollow core shaft 6 is preferably made of a magnetic conductive material, and can be used as an additional part of the primary iron core 60, to improve performance of the linear motor. In addition, a magnetic field leaking from the core unit 5 is directed outward through the hollow core shaft 6, protecting the sensor read head 9 inside the shaft from interference. When mechanical properties such as rigidity and hardness are met, the material of the hollow core shaft 6 includes, but is not limited to, structural steel, tool steel, or the like. The hollow core shaft 6 is arranged in a hollow form to reduce material usage, thereby reducing a weight and costs, and allowing the guide bar 7 on which the magnetic grid 8 is installed to slide in the cavity of the hollow core shaft 6. As shown in FIG. 2, the sensor is arranged inside the linear motor, and the sensor read head 9 is located inside the hollow core shaft 6 rather than on a bottom surface of the primary iron core, so as not to occupy a stroke of the secondary component of the linear motor; the guide bar 7 on which the magnetic grid 8 is installed, the guide bar 7, the cylindrical body 121, and the hollow cavity 310 are coaxial; the guide bar 7 and a housing of the sensor read head 9 is preferably made of a magnetic shielding material, to prevent the magnetic field leaking from the inside of the linear motor 19 from being directed to the vicinity of the sensor, thereby affecting measurement.

In an embodiment, the magnetic grid 8 includes a first magnetic grid and a second magnetic grid, the first magnetic grid includes a plurality of first magnets arranged in the axial direction, and the second magnetic grid includes a plurality of second magnets arranged in the axial direction. Lengths of the first magnetic grid and the second magnetic grid in the axial direction are the same, and lengths of magnetic poles of the first magnet and the second magnet are different. In an embodiment, to measure an absolute position of the linear motor during motion, the magnetic grid of the sensor uses the first magnetic grid and the second magnetic grid for calculation (first magnets and second magnets of different lengths generate different magnetic fields, and therefore, it may be determined that the first magnet and the second magnet are on the corresponding magnetic grids through an asymmetric design of the first magnet and the second magnet and cooperative calculation of the first magnetic grid and the second magnetic grid).

In an embodiment, the first magnetic grid and the second magnetic grid are symmetrically disposed on the guide bar and correspond to the sensor read head.

In an embodiment, the magnetic grid is a sector-shaped annular structure, to ensure that during operation of the linear motor, if there is relative rotation between positions of the magnetic grid and the read head, a position spacing between the magnetic grid and the read head remains unchanged, and position information can still be detected without affecting measurement accuracy.

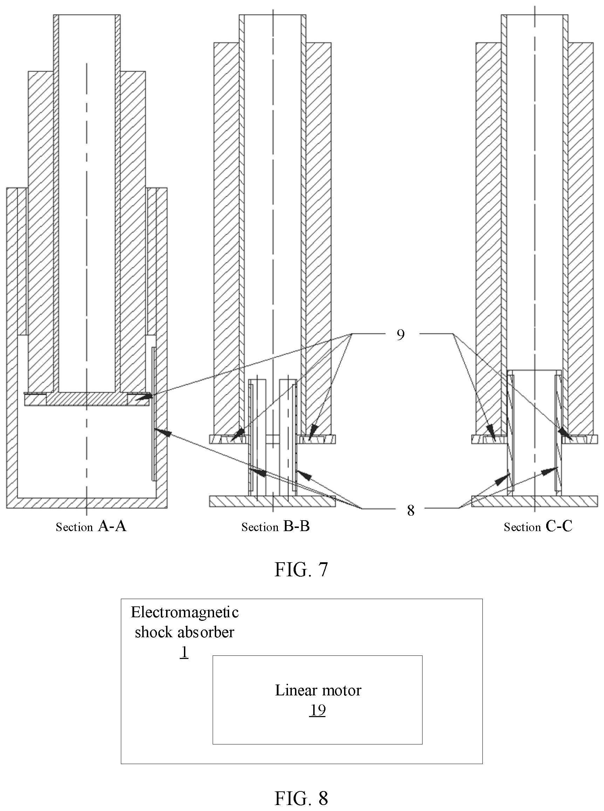

In another embodiment, an arrangement manner of the sensor read head and the magnetic grid further includes an arrangement manner shown in FIG. 7. Referring to FIG. 7, the sensor read head is located in a groove on a bottom surface of the support plate, and the magnetic grid is disposed on an inner wall of the sleeve under the magnetic steel. This also does not occupy the stroke of the secondary component. Further, in the foregoing arrangement manner, a person skilled in the art may perform corresponding verification on stress and deformation of the hollow core shaft 6 based on an actual application scenario. This application is not further limited herein.

As shown in FIG. 8, this application further provides an electromagnetic shock absorber 1, including the linear motor 19. In an embodiment, FIG. 1 is an overall sectional view of an electromagnetic shock absorber according to an embodiment of this application. As shown in FIG. 1, the electromagnetic shock absorber 1 includes the upper mount 17, a spring 18, and the linear motor 19. The upper mount 17 is fastened to a vehicle body by a bolt, and the linear motor 19 is fastened to the upper mount 17 by a nut (not shown). A bottom surface of the linear motor 19 is connected to a wishbone (not shown) through an interference fit or welding, further connecting to a wheel of the vehicle.

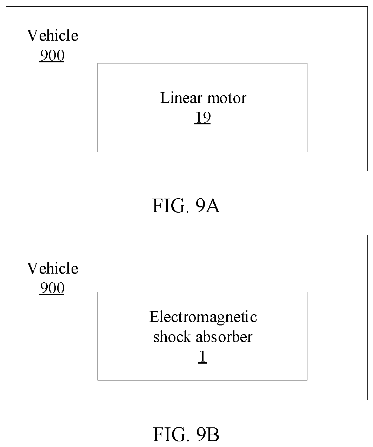

As shown in FIG. 9A and FIG. 9B, this application further provides a vehicle 900, including the electromagnetic shock absorber 1 or the linear motor 19.

Compared with the related technologies, this application has the following beneficial effect:
1. The primary component provided in this application includes the core unit. The core unit is a solid block rather than a stacked lamination, making the process simpler.
2. The primary component in this application is assembled from core units. A quantity of core units corresponds to a length of the hollow core shaft, and is highly flexible. The length of the hollow core shaft and the quantity of core units may be configured according to an actual requirement.
3. The magnetic grid sensor used in this application may be arranged in the hollow core shaft without occupying the stroke of the secondary component, and can accurately measure the absolute position of the motor during motion. A design of the annular magnetic grid strip ensures position measurement even if the primary component and the secondary component of the linear motor rotate relatively.
4. In this application, the current flow direction of the winding can be flexibly controlled by changing a winding manner of the winding.
5. According to this application, the water inlet pipe and the position sensor are integrated into the same hollow core shaft, resulting in a compact structure.

This application is described with the foregoing embodiments, but it will be understood that the foregoing embodiments are merely for purposes of illustration and description, and are not intended to limit this application to the scope of the described embodiments. In addition, a person skilled in the art will understand that, this application is not limited to the foregoing embodiments, and more variations and modifications may be made according to teachings of this application, and all these variations and modifications fall within the protection scope claimed in this application. The scope of protection of this application is defined by the appended claims and their equivalents.

## Claims

1. A primary component (300), comprising:
a primary iron core (60), a hollow cavity being provided in the primary iron core (310);
a partition (12), the partition being at least partially disposed in the hollow cavity to form a first chamber (311) sealed at one end, the partition comprising a cylindrical body (121), an annular cavity (120) being provided between the cylindrical body and an inner wall of the primary iron core, and the annular cavity being located in the first chamber; and
a water inlet pipe (13), an outlet end of the water inlet pipe being disposed in the annular cavity.

2. The primary component according to claim 1, wherein a water inlet (321) and a water outlet (322) are disposed on one end of the primary iron core that is away from the annular cavity, the water inlet is used to allow an external cooling medium to enter the primary iron core or used to allow the water inlet pipe to pass through, and the water outlet is used to discharge the cooling medium outside the primary iron core.

3. The primary component according to claim 2, wherein the water inlet pipe is constructed as a hollow annular pipe, and an inner cylinder (131) and an outer cylinder (132) of the annular pipe are enclosed to form the water inlet pipe; and
a gap (130) is provided between the outer cylinder of the annular pipe and the inner wall of the primary iron core, and the gap communicates with the water outlet, wherein a through hole (320) is provided in the annular pipe, the through hole communicates with the gap, and the through hole is located in the annular cavity.

4. The primary component according to claim 2 or 3, wherein the water inlet pipe is constructed as the hollow annular pipe, a gap is provided between the inner cylinder of the annular pipe and the cylindrical body of the partition, and the gap communicates with the water outlet, wherein a through hole is provided in the annular pipe, the through hole communicates with the gap, and the through hole is located in the annular cavity.

5. The primary component according to any one of claims 2 to **4,** wherein an axis of the water outlet coincides with an axis of the hollow cavity.

6. The primary component according to any one of claims 2 to 5, wherein the partition further comprises an annular bottom plate (122), and the annular bottom plate connects the inner wall of the primary iron core and one end of the cylindrical body that is away from the water outlet.

7. The primary component according to claim 6, wherein a spacing between one end of the water inlet pipe that is away from the water inlet and a surface of the annular bottom plate that faces the water inlet is less than 5 mm.

8. The primary component according to claim 6 or 7, wherein the end of the water inlet pipe that is away from the water inlet abuts against the surface of the annular bottom plate that faces the water inlet, the surface of the annular bottom plate that faces the water inlet blocks the end of the water inlet pipe that is away from the water inlet, a through hole is provided on a side wall of the water inlet pipe, and the through hole communicates with the water outlet.

9. The primary component according to claim 8, wherein a distance between a center of the through hole and the surface of the annular bottom plate that faces the water inlet is less than 5 mm.

10. The primary component according to any one of claims 6 to 9, wherein the cylindrical body comprises a cylindrical plate, and the annular bottom plate comprises a circular ring bottom plate.

11. The primary component according to claim 10, wherein the cylindrical body further comprises a circular top plate (123), and the circular top plate is connected to one end of the cylindrical body that is close to the water outlet, to block one end of the cylindrical body.

12. The primary component according to any one of claims 6 to 11, wherein the end of the water inlet pipe that is away from the water inlet is an inclined end face, and the inclined end face partially abuts against the surface of the annular bottom plate that faces the water inlet.

13. The primary component according to any one of claims 2 to 12, wherein the water inlet pipe comprises at least two branch water inlet pipes (133), and the at least two branch water inlet pipes are spaced apart in a circumferential direction of the annular cavity.

14. The primary component according to any one of claims 1 to 13, wherein the primary iron core comprises a core body (61) and a hollow core shaft (6), the hollow core shaft is sleeved in the core body, and a central hole of the hollow core shaft is configured as the hollow cavity.

15. The primary component according to claim 14, further comprising a plurality of windings (14), the plurality of windings being sequentially disposed on the core body in an axial direction;
the water outlet is disposed at the end of the primary iron core that is away from the annular cavity;
the partition comprises the annular bottom plate, and the annular bottom plate is connected to one end of the primary iron core that is away from the water outlet; and
the outlet end of the water inlet pipe is disposed close to the annular bottom plate, and the outlet end of the water inlet pipe communicates with the water outlet through the first chamber.

16. A linear motor (19), comprising the primary component according to any one of claims 1 to 15.

17. The linear motor according to claim 16, further comprising:
a secondary component (30), the secondary component being sleeved outside the primary component.

18. The linear motor according to claim 17, further comprising:
the secondary component comprises a sleeve (3) and a plurality of magnetic steels (4) disposed on an inner side wall of the sleeve, the primary iron core is cylindrical, and the sleeve is sleeved in the primary iron core.

19. The linear motor according to claim 18, further comprising a guide bar (7), the guide bar being fastened to the sleeve, and the guide bar being movably inserted into the cylindrical body.

20. The linear motor according to claim 19, wherein the guide bar, the cylindrical body, and the hollow cavity are coaxial.

21. An electromagnetic shock absorber (1), comprising the linear motor according to any one of claims 16 to 20.

22. A vehicle (900), comprising the linear motor according to any one of claims 16 to 20 or the electromagnetic shock absorber according to claim 21.
